(19)

**Europäisches Patentamt**

**European Patent Office**

**Office européen des brevets**

(11) **EP 2 779 519 A1**

(12) **EUROPEAN PATENT APPLICATION**

(43) Date of publication:
**17.09.2014 Bulletin 2014/38**

(51) Int Cl.:
***H04L 9/00*** *(2006.01)*

(21) Application number: **13305266.2**

(22) Date of filing: **11.03.2013**

---

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Thomson Licensing**
**92130 Issy-les-Moulineaux (FR)**

(72) Inventor: **Joye, Marc**
**35576 Cesson Sévigné (FR)**

(74) Representative: **Huchet, Anne et al**
**Technicolor**
**1, rue Jeanne d'Arc**
**92443 Issy-les-Moulineaux Cedex (FR)**

---

(54) **A method and a device for fault-resistant exponentiation in cryptographic systems**

(57) A processor (120) in a device (100) performs fault-resistant exponentiation using an input $x$ and a secret exponent $d$ to obtain a result S, by using an a priori selected integer $r$ and a chosen random element $a \in \{0,...,r - 1\}$ to form an extended base $\hat{x}$ is formed such that

$$\begin{cases} \hat{x} \equiv x \pmod{N} \\ \hat{x} \equiv 1 + a \cdot r \pmod{r^2} \end{cases}$$

In a generalization, for an a priori selected integer $t = br^2$ (where $b$ is an integer) co-prime to a modulus $N$, the processor (110) has a modular inverse $i_N = N^{-1}$ mod $t$. The processor (120) generates (S2) the extended base by computing $\hat{x} = x + N \cdot [i_N(1 + ar - x) \bmod t]$ and then computes (S3) an extended modulus $\hat{N} = Nt$, computes (S4) $S_r = \hat{x}^d$ mod $\hat{N}$, verifies (S5) if $S_r = 1 + dar \pmod{r^2}$, and if and only if this is so, returns (S6) the result $S = S_r$ mod $N$ via the interface 110.

S1 — Choose a random element $a \in \mathbb{Z}/r\mathbb{Z}$

S2 — Compute $\hat{x} = x + N \cdot [i_N(1 + ar - x) \bmod t]$

S3 — Compute $\hat{N} = Nt$

S4 — Compute $S_r = \hat{x}^d \bmod \hat{N}$

S5 — Verify if $S_r \equiv 1 + dar \pmod{r^2}$

S6 — If so, return $S = S_r$ mod $N$; otherwise return an error message.

Figure 2

EP 2 779 519 A1

## Description

TECHNICAL FIELD

The present invention relates generally to cryptography, and in particular to a countermeasure against fault attacks in RSA-based or discrete-log based cryptography.

BACKGROUND

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

Throughout the application, the RSA cryptosystem will be used as an illustrative, non-limitative example, but it will be appreciated that the problem and its solution can for example be readily extended to cryptosystems based on discrete logarithms like for example the Diffie-Hellman key exchange and the ElGamal encryption scheme.

It is well known that the RSA cryptosystem, particularly when implemented using Chinese remaindering, is sensitive to fault attacks. This holds true for plain RSA but also for versions using a provable secure padding.

An efficient way to preclude fault attacks was proposed by Vigilant [see RSA with CRT: A new cost-effective solution to thwart fault attacks. In E. Oswald and P. Rohatgi, editors, Cryptographic Hardware and Embedded Systems - CHES 2008, volume 5154 of Lecture Notes in Computer Science, pages 130-145. Springer, 2008].

Vigilant's method works as follows. On input $x$ and $d$, one has to compute $S = x^d \bmod N$ (or $x^d \bmod \{p, q\}$ in CRT mode), where the modulus $N$ is a product of two chosen prime number $p$ and $q$.

    1. Choose a random integer $r$ co-prime to $N$;
    2. Compute $\beta = N(N^{-1} \bmod r^2)$ and $\alpha = 1 - \beta \bmod Nr^2$;
    3. Compute $\hat{x} = \alpha x + \beta(1 + r) \bmod Nr^2$ and $\hat{N} = Nr^2$;
    4. Compute $S_r = \hat{x}^d \bmod \hat{N}$;
    5. If $S_r \equiv 1 + dr(\bmod r^2)$ then return $S = S_r \bmod N$; otherwise return an error message.

Vigilant's countermeasure works well to some extent, but it suffers from drawbacks: it involves the computation of a modular inverse (in step 2) and it extends the modulus (which is unavoidable) in a random manner. Since the modular inverse and the extension of the modulus depend on the random number, they are different from one exponentiation to the next.

It will thus be appreciated that it is desired to have a countermeasure that does not involve the computation of the modular inverse as Vigilant does. The present invention provides a countermeasure that overcomes at least some of the disadvantages of Vigilant's countermeasure.

SUMMARY OF INVENTION

In a first aspect, the invention is directed to a method of performing fault-resistant exponentiation using an input $x$, a secret exponent $d$ and a modulus $N$ to obtain a result $S$. A processor having a predetermined value $r$: receives the input $x$; computes an intermediate result $S_r$ using modular exponentiation involving the secret exponent $d$, an extended base $\hat{x}$ and an extended modulus $\hat{N}$, wherein the extended base $\hat{x}$ is computed using the input $x$ and a random value $a$, and wherein the extended modulus $\hat{N}$ is computed using the modulus $N$ and the predetermined value $r$ and is independent of the random value $a$; verifies that $S_r$ satifies an equation involving the random value $a$ calculated modulus a multiple of the predetermined value $r$; and returns the result $S = S_r \bmod N$ if and only if the verifying is successful.

In a first embodiment, the processor further chooses the random element $a$.

In a second embodiment, the random value

$$a \in \mathbb{Z}/r\mathbb{Z}.$$

In a third embodiment, the processor further computes the extended base $\hat{x} = x + N \cdot [i_N(1 + ar - x) \bmod t]$, wherein $i_N = N^{-1} \bmod t$ is a modular inverse, $t$ is co-prime to the modulus $N$ and $t = br^2$, where $r$ and $b$ are integers. It is advantageous that the processor further computes the extended modulus $\hat{N} = Nt$.

In a fourth embodiment, the intermediate value $S_r$ is calculated as $S_r = \hat{x}^d \bmod \hat{N}$.

In a fifth embodiment, the equation that the intermediate value $S_r$ is to satisfy is $S_r \equiv 1 + dar(\bmod r^2)$.

In a second aspect, the invention is directed to a device for performing exponentiation using an input $x$, a secret exponent $d$ and a modulus $N$ to obtain a result $S$, the exponentiation being resistant to fault attacks. The device comprises: an interface configured to received the input $x$ and to output the result $S$; and a processor configured to: compute an intermediate result $S_r$ using modular exponentiation involving the secret exponent $d$, an extended base $\hat{x}$ and an extended modulus $\hat{N}$, wherein the extended base $\hat{x}$ is computed using the input $x$ and a random value $a$, and wherein the extended modulus $\hat{N}$ is computed using the modulus $N$ and a predetermined value $r$ and is independent of the random value $a$, wherein the processor is configured to use the predetermined value $r$ for a plurality of exponentiations; verify that $S_r$ satisfies an equation involving the random value $a$ calculated modulus a multiple of the predetermined value $r$; and send the result $S = S_r \bmod N$ to the interface (110) if and only if the verifying is successful.

In a first embodiment, the processor is further configured to choose the random element $a$.

In a second embodiment, the random value $a \in$ .

In a third embodiment, the processor is further configured to compute the extended base $\hat{x} = x + N \cdot [i_N(1 + ar - x) \bmod t]$, wherein $i_N = N^{-1} \bmod t$ is a modular inverse, $t$ is co-prime to the modulus $N$ and $t = br^2$, where $r$ and $b$ are integers. It is advantageous that the processor is further configured to compute the extended modulus $\hat{N} = Nt$.

In a fourth embodiment, the processor is configured to calculate the intermediate value $S_r$ as $S_r = \hat{x}^d \bmod \hat{N}$.

In a fifth embodiment, the equation that the intermediate value $S_r$ is to satisfy is $S_r \equiv 1 + dar \pmod{r^2}$.

In a third aspect, the invention is directed to a non-transitory computer medium storing instructions that, when executed by a processor, perform the method of the first aspect.

BRIEF DESCRIPTION OF DRAWINGS

Preferred features of the present invention will now be described, by way of non-limiting example, with reference to the accompanying drawings, in which:

Figure 1 illustrates a cryptographic device with a countermeasure against fault attacks according to a preferred embodiment of the invention; and
Figure 2 illustrates a method for fault-resistant exponentiation according to a preferred embodiment of the invention.

DESCRIPTION OF EMBODIMENTS

It will be appreciated that, given a random integer $r$, Vigilant's countermeasure transforms input base $x$ into extended base $\hat{x}$ such that

$$\begin{cases} \hat{x} \equiv x \pmod{N} \\ \hat{x} \equiv 1 + r \pmod{r^2} \end{cases}$$

As already mentioned, apart from the computation of the modular inverse in step 2, a further drawback is that the extended modulus $Nt^2$ is constructed at random, which can contradict its efficient use. Indeed, some exponentiation algorithms impose conditions on the modulus. As a consequence, the extended modulus must then usually be further enlarged to comply with these conditions.

A main idea of the present invention is thus to construct a "random" element modulo $r^2$ for a *fixed* element $r$ (and thus a fixed extended modulus $\hat{N}$). In other words, the extended modulus is now predetermined for a chosen, fixed $r$. This way, both the computation of the modular inverse can be avoided (it can be calculated once and for all) and the extended modulus can be selected so as to comply with the conditions imposed on the modulus. For security, randomness is needed. In Vigilant's method, randomness is introduced by the choice of $r$. Note that in the present invention, since $r$ is fixed, randomness is needed elsewhere; this is why the extended base modulo $r^2$ (i.e., $\hat{x} \bmod r^2$) is chosen as a random element, as opposed to Vigilant's method. Indeed, if $r$ were fixed in Vigilant's method then so would be $\hat{x} \bmod r^2$, namely $\hat{x} \equiv 1 + r \pmod{r^2}$.

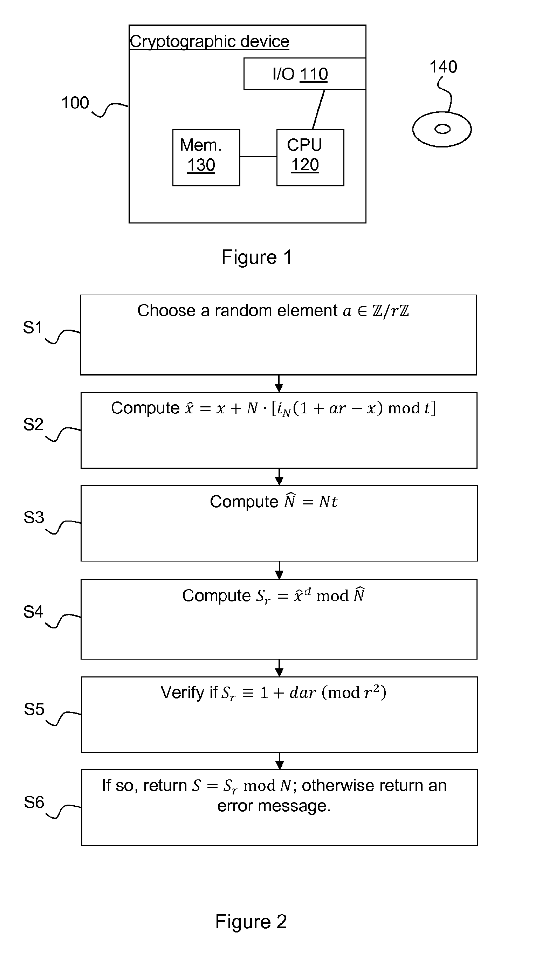

Figure 1 illustrates a cryptographic device 100 with a countermeasure against fault attacks according to a preferred embodiment of the invention. The device 100 comprises at least one interface unit 110 configured for communication, at least one processor ("processor") 120 and at least one memory 130 configured for storing data, such as accumulators and intermediary calculation results. The Figure also shows a first computer program product (non-transitory storage medium) 140 such as a CD-ROM or a DVD comprises stored instructions that, when executed by the processor 120, performs exponentiation according to the invention.

As for the exponentiation algorithm (which, it is again pointed out, is compatible with RSA as a non-limitative example), it is first to be noted and easily verified that $(1 + r)$ generates the subgroup

$$G_1 = \{x \in \mathbb{Z}/r^2\mathbb{Z} \mid x \equiv 1 \pmod{r}\}.$$ The elements of $G_1$ are $1 + a \cdot r$ with $a \in \{0, \dots, r-1\}$.

As already mentioned, the preferred embodiment uses an a priori selected integer $r$. In order to provide the countermeasure, a random element $a \in \{0, \dots, r-1\}$ is chosen and the extended base $\hat{x}$ is formed such that

$$\begin{cases} \hat{x} \equiv x \pmod{N} \\ \hat{x} \equiv 1 + a \cdot r \pmod{r^2} \end{cases}$$

This can easily be generalized to an a priori selected integer $t = br^2$ (where $b$ is an integer > 0 that can be squarefree or not).

For the a priori selected integer $t = br^2$ co-prime to $N$, the processor 110 obtains or computes a modular inverse $i_N = N^{-1} \bmod t$.

The device 100 is then ready to perform modular exponentiation resistant to fault attacks, using an input $x$ received via the interface 110 and a (secret) exponent $d$, as follows and as illustrated in Figure 2:

S1. Choose a random element $a \in \mathbb{Z}/r\mathbb{Z}$;
S2. Compute $\hat{x} = x + N \cdot [i_N(1 + ar - x) \bmod t]$;
S3. Compute $\hat{N} = Nt$;
S4. Compute $S_r = \hat{x}^d \bmod \hat{N}$;
S5. Verify if $S_r \equiv 1 + dar \pmod{r^2}$.
S6. If and only if so, return $S = S_r \bmod N$ via the

interface 110; otherwise return an error message.

It is worth noting that since $t$ is fixed, the value of $i_N$ can be precomputed. No modular inverse is therefore required for the evaluation of $\hat{x}$.

As will be shown, the method of the present invention nicely combines with existing implementations. For example, Quisquater's algorithm [see U.S. Patent No. 5,166,978, Encoding system according to the so-called RSA method, by means of a microcontroller and arrangement implementing this system] - used in all Philips's (now NXP) co-processors - requires a modulus with its $c$ most significant bits equal to 1. This can be achieved by multiplying modulus $N$ by some appropriately chosen factor $\delta$ [see M. Joye. On Quisquater's multiplication algorithm. In D. Naccache, editor, Cryptography and Security: From Theory to Applications, volume 6805 of Lecture Notes in Computer Science, pages 3-7. Springer, 2012].

Applied to the proposed method, it is for example possible to set $t = \delta$. In this particular case, it is worth noting that the countermeasure comes virtually for free (as no extra working memory is required and the overall cost is very low).

It will thus be appreciated that the present invention can provide a countermeasure that does not require inversion (apart from the one that can be pre-computed), which is the main bottleneck in Vigilant's countermeasure and which means that the present method can achieve better performance speedwise and reduced requirements for working memory if the same processors and sensible implementations are used. Further, the proposed countermeasure nicely combines with certain modular multiplication algorithms that already extend the modulus.

Each feature disclosed in the description and (where appropriate) the claims and drawings may be provided independently or in any appropriate combination. Features described as being implemented in hardware may also be implemented in software, and vice versa. Reference numerals appearing in the claims are by way of illustration only and shall have no limiting effect on the scope of the claims.

**Claims**

1. A method of performing modular exponentiation using an input $x$, a secret exponent $d$ and a modulus $N$ to obtain a result $S$, the exponentiation being resistant to fault attacks, the method including at least the following steps in a processor (120) of a device (100), the processor having a predetermined value $r$, of:

   - receiving the input $x$;
   - computing (S4) an intermediate result $S_r$ using modular exponentiation involving the secret exponent $d$, an extended base $\hat{x}$ and an extended modulus $\hat{N}$, wherein the extended base $\hat{x}$ is computed using the input $x$ and a random value $a$, and wherein the extended modulus $\hat{N}$ is computed using the modulus $N$ and the predetermined value $r$ and is independent of the random value $a$;
   - verifying that $S_r$ satifies an equation involving the random value $a$ calculated modulus a multiple of the predetermined value $r$; and
   - return (S6) the result $S = S_r \bmod N$ if and only if the verifying is successful.

2. The method of claim 1, further comprising the step of choosing (S1) the random element $a$.

3. The method of claim 1, wherein the random value $a \in$ .

4. The method of claim 1, further comprising the step of computing (S2) the extended base $\hat{x} = x + N \cdot [i_N(1 + ar - x) \bmod t]$, wherein $i_N = N^{-1} \bmod t$ is a modular inverse, $t$ is co-prime to the modulus $N$ and $t = br^2$, where $r$ and $b$ are integers.

5. The method of claim 4, further comprising the step of computing (S3) the extended modulus $\hat{N} = Nt$.

6. The method of claim 1, wherein the intermediate value $S_r$ is calculated as $S_r = \hat{x}^d \bmod \hat{N}$.

7. The method of claim 1, wherein the equation that the intermediate value $S_r$ is to satisfy is $S_r \equiv 1 + dar(\bmod r^2)$.

8. A device (100) for performing exponentiation using an input $x$, a secret exponent $d$ and a modulus $N$ to obtain a result $S$, the exponentiation being resistant to fault attacks, the device (100) comprising:

   - an interface (110) configured to received the input $x$ and to output the result $S$; and
   - a processor (120) configured to:

      - compute an intermediate result $S_r$ using modular exponentiation involving the secret exponent $d$, an extended base $\hat{x}$ and an extended modulus $\hat{N}$, wherein the extended base $\hat{x}$ is computed using the input $x$ and a random value $a$, and wherein the extended modulus $\hat{N}$ is computed using the modulus $N$ and a predetermined value $r$ and is independent of the random value $a$, wherein the processor is configured to use the predetermined value $r$ for a plurality of exponentiations;
      - verify that $S_r$ satifies an equation involving the random value $a$ calculated modulus a multiple of the predetermined value $r$; and

- send the result $S = S_r \bmod N$ to the interface (110) if and only if the verifying is successful.

9. The device of claim 8, wherein the processor (120) is further configured to choose the random element a.

10. The device of claim 8, wherein the random value $a \in$ .

11. The device of claim 8, wherein the processor (120) is further configured to compute the extended base $\hat{x} = x + N \cdot [i_N(1 + ar - x) \bmod t]$, wherein $i_N = N^{-1} \bmod t$ is a modular inverse, $t$ is co-prime to the modulus $N$ and $t = br^2$, where $r$ and $b$ are integers.

12. The device of claim 11, wherein the processor (120) is further configured to compute the extended modulus $\hat{N} = Nt$.

13. The device of claim 8, wherein the processor is configured to calculate the intermediate value $S_r$ as $S_r = \hat{x}^d \bmod \hat{N}$.

14. The device of claim 8, wherein the equation that the intermediate value $S_r$ is to satisfy is $S_r \equiv 1 + dar \pmod{r^2}$.

15. A non-transitory computer medium (140) storing instructions that, when executed by a processor, perform the method of any one of claims 1 to 7.

Cryptographic device

I/O 110

CPU 120

Mem. 130

100

140

Figure 1

S1 — Choose a random element $a \in \mathbb{Z}/r\mathbb{Z}$

S2 — Compute $\hat{x} = x + N \cdot [i_N(1 + ar - x) \bmod t]$

S3 — Compute $\widehat{N} = Nt$

S4 — Compute $S_r = \hat{x}^d \bmod \widehat{N}$

S5 — Verify if $S_r \equiv 1 + dar \pmod{r^2}$

S6 — If so, return $S = S_r \bmod N$; otherwise return an error message.

Figure 2

**Europäisches Patentamt**

**European Patent Office**

**Office européen des brevets**

# EUROPEAN SEARCH REPORT

Application Number

EP 13 30 5266

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | DAVID VIGILANT ED - ELISABETH OSWALD ET AL: "RSA with CRT: A New Cost-Effective Solution to Thwart Fault Attacks", 10 August 2008 (2008-08-10), CRYPTOGRAPHIC HARDWARE AND EMBEDDED SYSTEMS Â CHES 2008; [LECTURE NOTES IN COMPUTER SCIENCE], SPRINGER BERLIN HEIDELBERG, BERLIN, HEIDELBERG, PAGE(S) 130 - 145, XP047029799, ISBN: 978-3-540-85052-6 * the whole document * | 1-15 | INV. H04L9/00 |
| A | CHONG HEE KIM ET AL: "Fault Attacks for CRT Based RSA: New Attacks, New Results, and New Countermeasures", 9 May 2007 (2007-05-09), INFORMATION SECURITY THEORY AND PRACTICES. SMART CARDS, MOBILE AND UBIQUITOUS COMPUTING SYSTEMS; [LECTURE NOTES IN COMPUTER SCIENCE;;LNCS], SPRINGER BERLIN HEIDELBERG, BERLIN, HEIDELBERG, PAGE(S) 215 - 228, XP019079367, ISBN: 978-3-540-72353-0 * the whole document * | 1-15 | |
| A | FR 2 942 560 A1 (OBERTHUR TECHNOLOGIES [FR]) 27 August 2010 (2010-08-27) * page 1, line 1 - page 12, line 4 * | 1-15 | TECHNICAL FIELDS SEARCHED (IPC) H04L |
| A | US 2010/232603 A1 (ITOH KOUICHI [JP]) 16 September 2010 (2010-09-16) * paragraphs [0003] - [0014] * * paragraphs [0066] - [0080] * * figures 21,22 * | 1-15 | |

The present search report has been drawn up for all claims

| Place of search | Date of completion of the search | Examiner |
|---|---|---|
| Munich | 7 August 2013 | Di Felice, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 13 30 5266

This annex lists the patent family members relating to the patent documents cited in the above-mentioned European search report.
The members are as contained in the European Patent Office EDP file on
The European Patent Office is in no way liable for these particulars which are merely given for the purpose of information.

07-08-2013

| Patent document cited in search report | | Publication date | Patent family member(s) | | Publication date |
|---|---|---|---|---|---|
| FR 2942560 | A1 | 27-08-2010 | NONE | | |
| US 2010232603 | A1 | 16-09-2010 | JP | 2010166463 A | 29-07-2010 |
| | | | US | 2010232603 A1 | 16-09-2010 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5166978 A

**Non-patent literature cited in the description**

- RSA with CRT: A new cost-effective solution to thwart fault attacks. Cryptographic Hardware and Embedded Systems - CHES 2008, volume 5154 of Lecture Notes in Computer Science. Springer, 2008, vol. 5154, 130-145

- On Quisquater's multiplication algorithm. **M. JOYE.** Cryptography and Security: From Theory to Applications, volume 6805 of Lecture Notes in Computer Science. Springer, 2012, vol. 6805, 3-7